# EUROPEAN PATENT APPLICATION

(11) **EP 2 416 289 A1**
(43) Date of publication of application: **08.02.2012**
(21) Application number: 11006470.6
(22) Date of filing: 05.08.2011
(51) Int. Cl.: G06Q 30/00

(54) **System for measuring variables from data captured from internet applications**

(30) Priority: 05.08.2010 US 851461
(71) Applicant: Accenture Global Services Limited, Dublin 4 (IE)
(72) Inventor: Srivastava, Janmesh Dev, Isleworth London TW7 5BA (GB); Umblijs, Andris, Knaphill Woking GU21 2TR (GB); Wang, Chao, Fairfax VA 22030 (US); Kirkby, Stephen Denis, Unley Park SA 5061 (AU); Kellett, Peter Charles, Kilbum SA 5084 (AU); Tran, Thoai Duy Khang, Pasadena SA (AU); Dubey, Dharmendra K., Isleworth London TW7 4LZ (GB)
(74) Representative: Müller-Boré & Partner Patentanwälte

(57) **Abstract**

A system is configured to determine aggregated social media variables that may be used for modeling. The system includes an information identifier module determining keywords and phrases. The system also includes an aggregator receiving information collected from social media applications using the keywords and phrases and determining values for social media variables from the collected information. The aggregator aggregates the social media variables based on the values and weightings of the social media variables.

## Description

### BACKGROUND

Given the ubiquitous nature of the Internet, the Internet has become a common vehicle for the exchange of information. In many cases, Internet applications, including social media applications such as TWITTER and FACEBOOK, are used to post messages. Wikis and blogs are other examples of applications used to post information on the Internet. Users may desire to view certain information published on the Internet that is related to a particular topic or may desire to determine other users opinions on the topic. However, given the vast amount of information that is available on the Internet, it is difficult to parse all the information to identify what is most relevant to the user and it is difficult to present the data in a meaningful manner that can be understood by the user.

### SUMMARY

According to an embodiment, a social media analytical system determines aggregated social media variables, which may be used for mixed modeling. The social media analytical system includes an information identifier module determining keywords and phrases, and an aggregator, which may be executed by a computer system. The aggregator receives information collected from social media applications using the keywords and phrases, determines values for social media variables from the collected information, and aggregates the social media variables based on the values and weightings of the social media variables.

According to an embodiment, a method of determining aggregated social media variables includes determining keywords and phrases; receiving information collected from social media applications via the Internet using the keywords and phrases; determining values for social media variables from the collected information; and aggregating, by a computer system, the social media variables based on the values and weightings of the social media variables. The method may be performed by a computer system executing computer readable instructions stored on a computer readable medium, which may be non-transitory.

### BRIEF DESCRIPTION OF DRAWINGS

The embodiments of the invention will be described in detail in the following description with reference to the following figures.

Figure 1 illustrates a system, according to an embodiment;

Figure 2 illustrates an example of different phases performed by the system shown in figure 1, according to an embodiment;

Figure 3 illustrates examples of a category, sub-categories, and keywords and phrases, according to an embodiment;

Figure 4 illustrates different types of social media applications, according to an embodiment;

Figure 5 illustrates an example of determining aggregated social media variables from social media variables, according to an embodiment;

Figure 6 illustrates an example of aggregating the social media variables across subcategories and categories, according to an embodiment;

Figure 7 illustrates generating time series curves for the aggregated social media variables, according to an embodiment;

Figure 8 illustrates sales curves for different marketing channels that may be used in a mixed model, according to an embodiment;

Figure 9 illustrates a method for aggregating social media variables, according to an embodiment;

Figure 10 illustrates a method for aggregating social media variables across topics, according to an embodiment;

Figure 11 illustrates a method for aggregating social media variables across subcategories and categories, according to an embodiment; and

Figure 12 illustrates a computer system that may be used as a platform for the system shown in figure 1, according to an embodiment.

### DETAILED DESCRIPTION OF EMBODIMENTS

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In some instances, well known methods and structures have not been described in detail so as not to unnecessarily obscure the embodiments. Also, the embodiments may be used in combination with each other.

### 1. Overview

According to an embodiment, a system uses econometrics to determine the impact of social media applications on sales of a product, which may include a good and/or a service. Social media applications may include web-based technologies that use the Internet to publish user generated content. A social media application may use web-based technology for social interaction. As described above, some examples of social media applications are social networking applications, such as MYSPACE, TWITTER and FACEBOOK. Other types of social media applications may include wikis, blogs, etc.

The system identifies social media variables that may be used as metrics to measure the impact of social media applications on sales. The variables may include time series variables to estimate the impact of social media applications over time. The system is also configured to aggregate the social media variables into a smaller subset of variables that may be provided as an input for mixed modeling. The aggregation may include using econometrics to determine weights used for aggregation.

Mixed-modeling is used to estimate the impact that a variety of different activities, including activities outside social media applications, may have on sales. The mixed-modeling uses variables for the different activities. These variables may include variables associated with different marketing channels, such as TV, online, radio, print, etc. The mixed modeling can include more variables than the number of observed data points. Thus, the mixed modeling may allow a limited number of additional variables that can be used for social media. The number of variables used to measure the impact of social media applications on sales may exceed this limited number of additional variables that can be used by the mixed modeling. Accordingly, according to an embodiment, the social media variables are aggregated to a limited number of variables that may be included in mixed modeling to estimate the impact of a marketing campaign across many different marketing channels.

The embodiments are generally described with respect to determining the impact of social media applications on sales. It will be apparent to one of ordinary skill in the art the embodiments may be used to determine the impact of social media applications on other business objectives, such as improving brand equity, maintaining customer lifetime, etc.

### 2. System

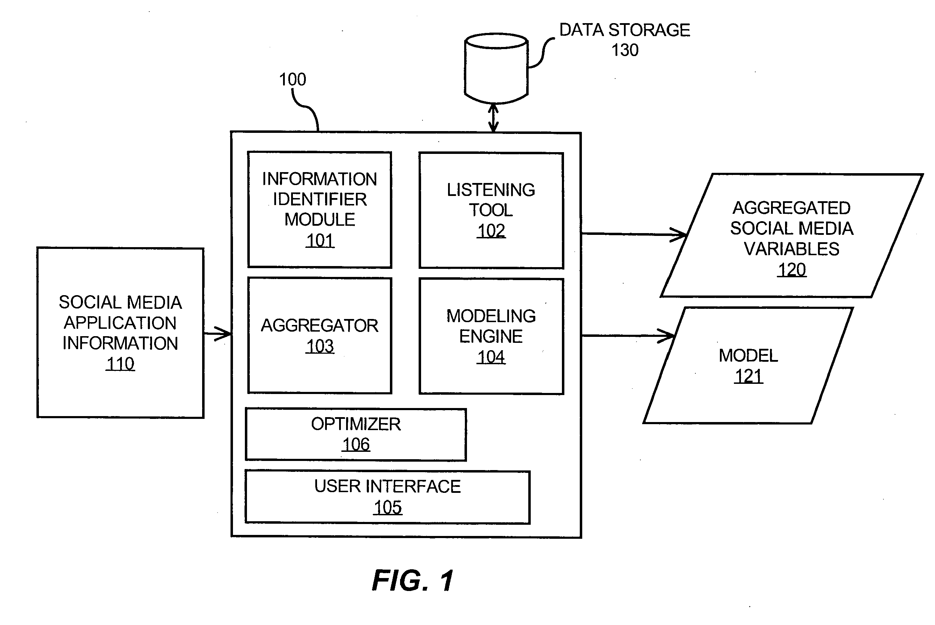

Figure 1 illustrates a social media analytical system 100, according to an embodiment. The system 100 includes information identifier module 101, listening tool 102, aggregator 103, modeling engine 104, user interface 105, optimizer 106, and data storage 130. The information identifier module 101 gathers information for multiple variables, referred to as social media variables, associated with social media applications. In the description below, first, the functions of each of the components of the system 100 are described. This is followed by examples that illustrate the functions performed by the system 100.

The information identifier module 101 determines the information to capture from social media applications on the Internet. In one embodiment, categories of information to capture are identified. These categories may be categories related to a particular product. Sub-categories are determined for each category, and keywords and/or phrases are determined for each category and subcategory. For example, a category for a product may be electronic goods. A subcategory may be mobile phones. Keywords and phrases may be names of brands of mobile phones, including competitor brands, descriptions of mobile phone features, and terms related to the mobile phones.

The categories, sub-categories, and keywords and phrases may be computer-generated by analyzing data sets comprised of terms and descriptions related to different products. Classifiers and other known artificial intelligence techniques may be used to generate the categories, sub-categories, and keywords and phrases. Also, experts may determine one or more of the categories, subcategories, and keywords and phrases, and this information may be provided to the information identifier module 101 through the user interface 105.

The listening tool 102 captures information 110 from social media applications related to the categories, sub-categories, and keywords and phrases. In one example, topics in social media applications are identified by the listening tool 102. A topic may include information published on the Internet, which may be available for subsequent social comment by other users. A topic may include user generated content comprised of one or more messages. A message is a publication of user generated content, for example, on the Internet. A message may include a post, such as video posted on a website. A topic may include an original message and multiple related messages. For example, the posted video is the original message and comments posted on the web site about the video or ratings of the video are related messages. In another example, an original post on a blog or personal web page or some other type of social networking application may be an original message. Any messages referencing the original message are related messages, and together they may comprise a topic.

The information identifier module 101 provides information 110, including the keywords and phrases, to the listening tool 102 so the listening tool 102 can identify the topics. The identified topics may include one or more of the keywords and phrases for the subcategories. These topics are identified by the listening tool 102, for example, by scanning social media application web sites for the keywords and phrases.

Conventional scanning tools may be used for the listening tool 102. These tools are capable of scanning social media application web sites for matches with the keywords and phrases. For matches, the topic, including associated messages, is identified. Also, the messages retrieved from the web sites may have meta data that can be used to identified related messages. Topics gathered by the listening tool 102 are analyzed as described in detail below to determine aggregated social media variables that may be used in a model.

The aggregator 103 analyzes the identified topics and associated messages to determine aggregated social media variables 120. The analyzing may include determining weights at the message level, topic level and subcategory level, and using the weight to aggregate social media variables. The modeling engine 104 may create a model 121 with the aggregated social media variables 120, and then the model 121 may be used to estimate the impact of social media applications on sales or other marketing objectives.

The optimizer 106 may be used to forecast or estimate sales based on a set of inputs and identify optimal investments in various marketing channels based on the forecasting to maximize sales. The optimizer 106 uses models, including the model 121, generated by the modeling engine 104 to perform the forecasting.

The modeling performed by the modeling engine 104 may include generating a mixed model. The model generation may include determining sales data from different marketing channels and building regression models to determine how much each activity/channel contributed to the sales. The optimizer 106 uses the mixed model to estimate the impact on sales for different investment scenarios in the marketing channels. The marketing channels may include social media applications, TV, radio, newspaper/print ads, etc. The mixed model, which is generated by the modeling engine 104, is generated from the aggregated social media variables and variables for the other marketing channels.

The user interface 105 may include a graphical user interface. The user interface 105 may be accessible via the Internet or through a private intranet. The user interface 105 can receive user data used for determining aggregated social media variables and for identifying data for generating models and for optimizing marketing investments. The user interface 105 may also display information related to the aggregated social media variables, models and investment optimization. The data storage 105 stores any data that may be used by the system 100. The data storage 105 may include a database for storing the data.

### 3. Examples

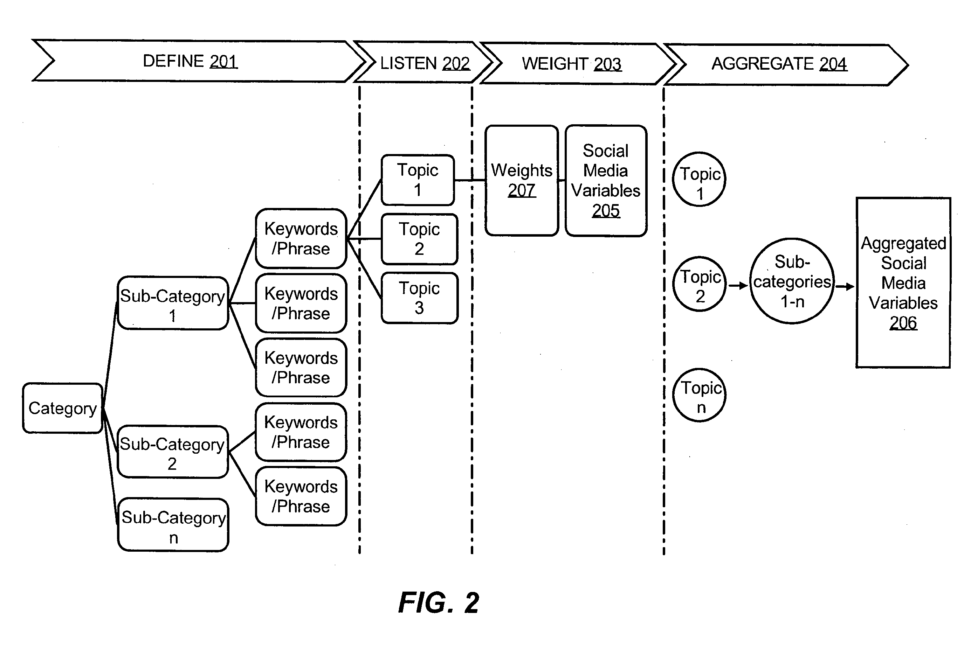

Figure 2 illustrates an example of different phases performed by the system 100 shown in figure 1. The phases include define 201, listen 202, weight 203 and aggregate 204. In the define phase 201, the information identifier module 101 of the system 100 determines one or more categories, such as the category 1, sub-categories 1-n for the category 1, and keywords and phrases for each of the sub-categories 1-n. In the listen phase 202, information from the define phase 201 is used by the listening tool 102 of the system 100 to determine topics, such as the topics 1-n for keywords and phrases derived for the sub-category 1. The keywords and phrases, categories and subcategories may be provided by users and/or determined by computerized analysis of data relating to product whose sales are being optimized.

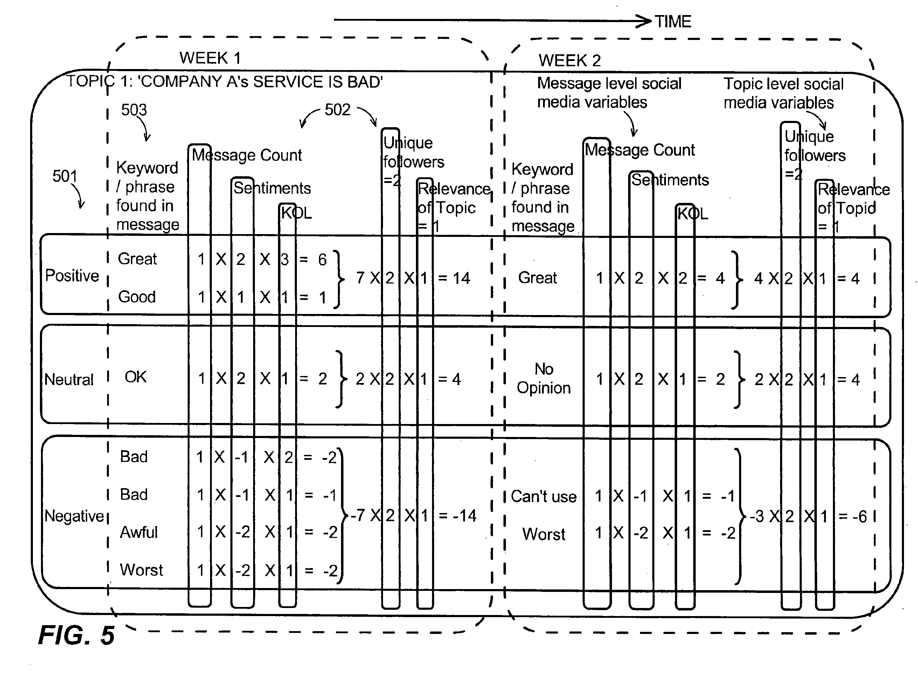

In the weight phase 203, the aggregator 103 of the system 100 determines weights 207 for social media variables 205, such as followers, key opinion leaders, topic relevance, and topic's unique followers. Other social media variables may also be used. The social media variables 205 may include metrics for measuring an attitude or emotion of users of social media applications as directed to a topic. The topic may be related to a product, so the social media variables 205 can be used to estimate the impact on sales of a product. In the weight phase 203, a scaling system may be used to apply the weightings, such as described with respect to figure 5.

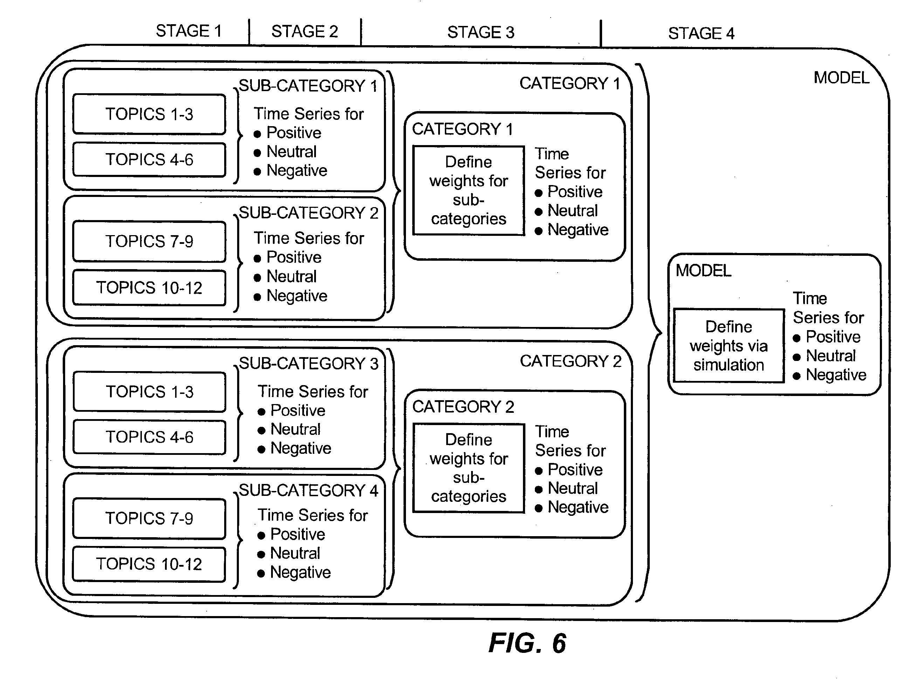

In the aggregation phase 204, the social media variables 205 are combined to determine values for aggregated social media variables 206. The aggregated social media variables 206 describe an attitude, thought or judgment or emotion of users of the social media applications as it relates to a topic. The aggregated social media variables 206 by way of example may include positive, neutral and negative. Aggregation may include aggregating across topics and subcategories and categories to determine the aggregated social media variables. The aggregated social media variables 206 may be combined across different topics to determine the attitude towards a particular subcategory, such as subcategory 1, or towards a particular category. For example, values for the "positive" aggregated social media variable are determined for each of topic 1-3 in subcategory 1. These values are summed to determine the total "positive" value for subcategory 1. Similarly, total "neutral" and "negative" values can be determined for subcategory 1. Also, weights may be determined for each category, so a time series of each aggregated social media variable across all the categories is determined. Aggregation is further described with respect to the examples in figures 5 and 6.

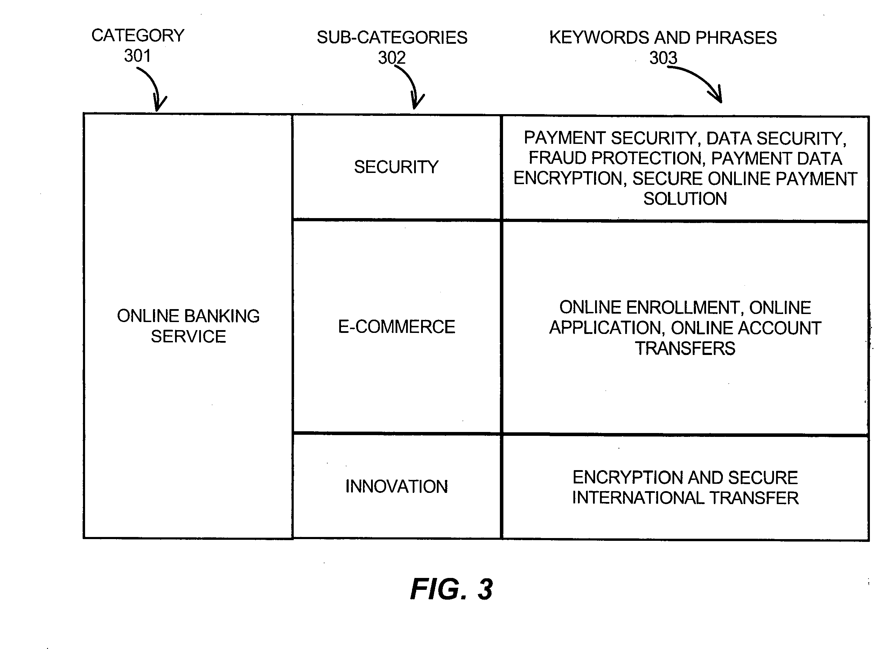

Figure 3 illustrates examples of a category 301, sub-categories 302, and keywords and phrases 303. The category 301, for example, is "online banking service" for a company that provides these services. The sub-categories 302 are security, e-commerce, and innovation. The keywords and phrases 303 for security may include payment security, data security, fraud protection, payment data encryption, and secure online payment solution. The keywords and phrases 303 for e-commerce may include online enrollment, online application, online account transfers. The keywords and phrases 303 for innovation may include encryption, and secure international transfer.

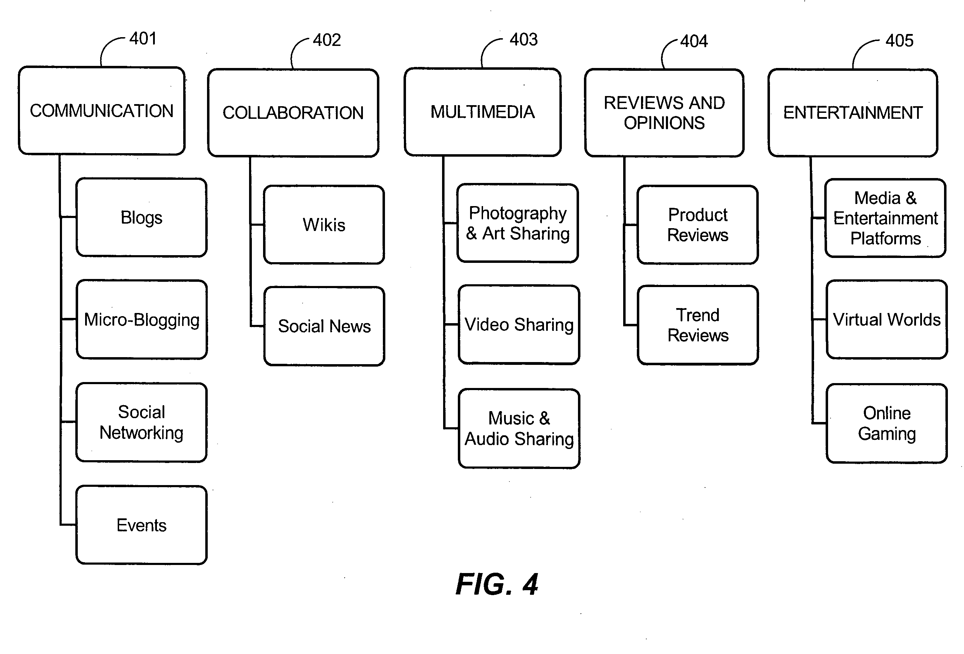

Figure 4 shows different types of social media applications. The listening tool 102 of the system 100 may be used to scan the social media applications for topics. The different types of social media applications may include communication 401, collaboration 402, multimedia 403, reviews and opinions 404, and entertainment 405. Examples of each type of social media application are shown in figure 4. For example, communication social media applications 401 may include blogs, microblogs, social networking and events. Collaboration social media applications 402 may include wikis, social news (such as small city or town news sites). Multimedia social media applications 403 may include content sharing sites, such as photography sharing, video, sharing, and music sharing. The reviews and opinions 404 may include travel review web sites, product reviews, etc. The entertainment 405 may include online games, virtual worlds with personal avatars, and other entertainment platforms. Listening tools are available to scan the social media applications to identify topics relevant to the product or category.

Figure 5 shows an example of determining aggregated social media variables from social media variables. The social media variables are weighted, and the social media variables are aggregated based on the weights. The aggregated social variables may be periodically determined over time and plotted to form a time-series plot. The periodicity for determining the social media variables may be weekly, bi-weekly, etc. Also, the social media variables and the aggregated social media variables may be determined for each topic.

An example of a topic shown in figure 5 is "Company A's service is bad." This topic is labeled as topic 1. The topic 1 may include multiple messages as described above. "Company A's service is bad" may be the text from the original message of the topic.

The aggregated social media variables 501 determined for the topic 1, for example, are positive, neutral and negative. Examples of the social media variables that are aggregated are message count, sentiment, key opinion leader (KOL), number of unique followers, and relevance of topic count, which are shown as social media variables 502. Of course other social media variables may be used. The weighting performed to aggregate the social media variables 502 may include scaling one or more of the social media variables 502. Simple scales may be used as described below or more complex scales may be used. The weighting and aggregating may also include combining the scaled variables to determine a value for each of the aggregated variables 501.

Keywords and phrases from the define phase 201 shown in figure 2 may be identified by the listening tool 102 in the topic 1. In this example, keywords 503 found in the messages for the topic 1 include great, good, OK, bad, awful, and worst. Each of the keywords is associated with one of the aggregated variables 501, such as positive, neutral, and negative. Message count, sentiment and KOL are shown as social media variables 502. Message count is the number of messages including the keyword. Sentiment is an attitude, thought or judgment of the topic. In this example, sentiment is valued on a scale from -2 to +2. For example, the keyword "great" is valued at the highest sentiment of +2 and the keywords "awful" and "worst" are valued at the lowest sentiment of -2. KOL describes the number of people considered to be important that create a message for a topic, such as celebrities, experts, political leaders, etc. KOL values may be on a scale of 1 to 3, where 3 is the highest. Thus, as shown in figure 5, one or more of the social media variables may be given a value in a scale according to a message or a keyword in the message. Also, as shown in figure 5, each keyword may be assigned to one of the aggregated variables 501, so the scaled values for the social media variables 502 can be used to determine a value for each of the aggregated variables 501.

The values for the weighted social media variables are combined to determine values for the aggregated social media variables. In one embodiment, scaled values for message level social media variables are summed for each keyword and phrase and for each aggregated social media variable. Then, the sums are multiplied by scaled values for topic level social media variables to determine values for the aggregated social media variables. Message level social media variables are determined based on each message and include message, count, sentiment, and KOL. Topic level social media variables are based on all the messages in the topic and may include unique followers and relevance of topic.

In the example shown in figure 5, values for message level social media variables determined for message, sentiment, and KOL are summed for each keyword and for each aggregated social media variable. For example, the summed values for the social media variables for the keywords "great" and "good" are 6 and 1 respectively. Then 6 and 1 are summed and multiplied by values for the topic level social media variables comprised of unique followers and relevance of topic to determine a value of 14 for the "positive" aggregated social media variable. Similarly, 4 and 14 are values determined for the "neutral" and "negative" aggregated social media variables for week 1.

Values for each of the aggregated social media variables may be determined week-by-week based on keywords and phrases identified in each of the messages in each of the topics. For example, 4, 4, and -6 are values for the "positive", "neutral" and "negative" aggregated social media variables for week 2, as shown in figure 5. These values are based on the keywords and phrases identified in the week 2 messages for the topic 1. Note that the keywords and phrases may be different for each week because the messages are different from week-to-week. The values for the social media variables and aggregated social media variables are incrementally calculated from week-to-week so the social media variables are not double counted. For example, week 2 values are determined for new messages identified for the week 2 time period. As a result, three time series graphs may be generated for the positive, negative and neutral aggregated social media variables, and these values may be used for a model.

Figure 6 shows an example of aggregating the social media variables across subcategories and categories. Figure 6 shows four stages for the aggregation. At stage 1, values for the aggregated social media variables (e.g., positive, neutral and negative) are determined for each topic, such as described with respect to figure 5. At stage 2, for each topic, the values for each aggregated social media variable are summed. For example, for topics 1-3, all the "positive" values are summed to determine a total "positive" value for subcategory 1. The summing may be performed per week. For example, week 1 "positive" values are summed for topics 1-3 to determine a total for the week. Then, week 2 values are summed and so on to generate a time series of the totals. Total values for "neutral" and "negative" are similarly determined for subcategory 1.

At stages 3 and 4, econometrics are used to aggregate across subcategories and to determine the final time series values that may be used for a mixed model. Econometrics includes applying conventional quantitative or statistical methods to analyze and test economic relationships, which in these examples may includes the relationship between sales and products. Through conventional statistical processes, at stage 3, an aggregation weight is determined for each subcategory. The statistical processes may include testing different weights on historic sales data to determine the accuracy of the weights. At stage 4, econometrics may include using linear regression to generate a model and testing the model with the weighted aggregation variables to determine the accuracy of the model for forecasting the impact on sales.

The aggregation weights determined at stages 3 and 4 are applied as follows. The aggregation weights are applied to each subcategory to determine totals for each category based on the econometrics. For example, the total values for "positive", per week, per subcategory, are multiplied by an aggregation weight for the subcategory to determine a weighted subcategory value for "positive" per week. For each of subcategories 1 and 2, the weighted subcategory value for "positive" are combined to determine a weighted category value for "positive" per week. Weighted category values, per week, for "negative" and "neutral" are also determined.

The optimizer 106 of the system 100 shown in figure 1 performs analytics. Analytics measures the impact of social media applications and the impact of active social media engagement on sales. The active social media engagement is responsive to information intentionally provided to a social media application to elicit response or influence sales. The information may include viral seeds seeded by a company's marketing efforts (e.g., promotions, product information, etc.) or information provided in a debate through messages in a social media application. The analytics also measures the impact of unsolicited sentiment of users of social media applications. The analytics uses the model generated by the modeling engine 104 to estimate the impact of social media applications and the impact of active social media engagement on sales or incremental sales.

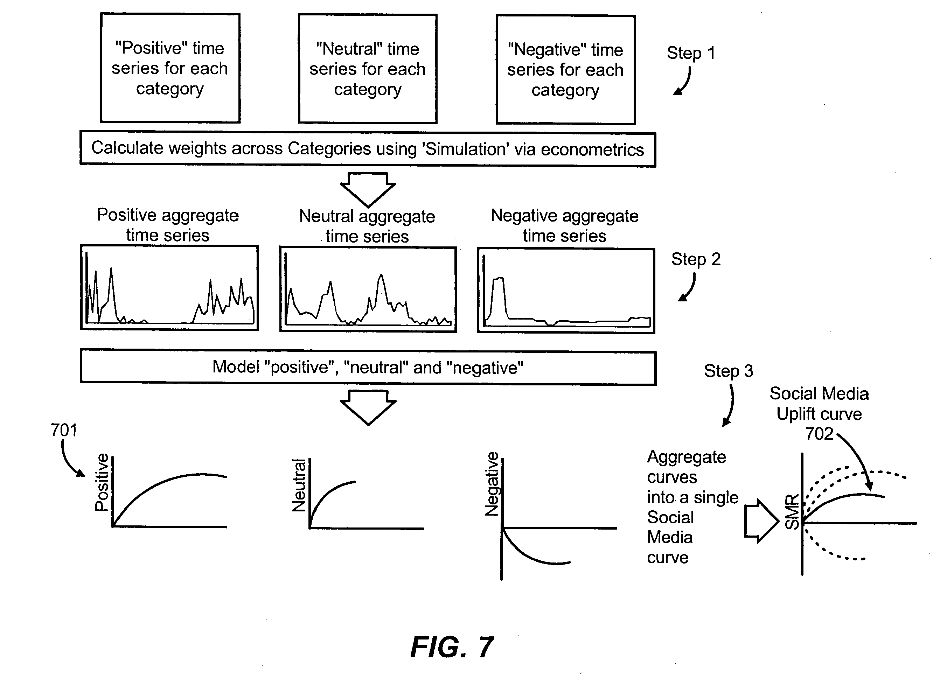

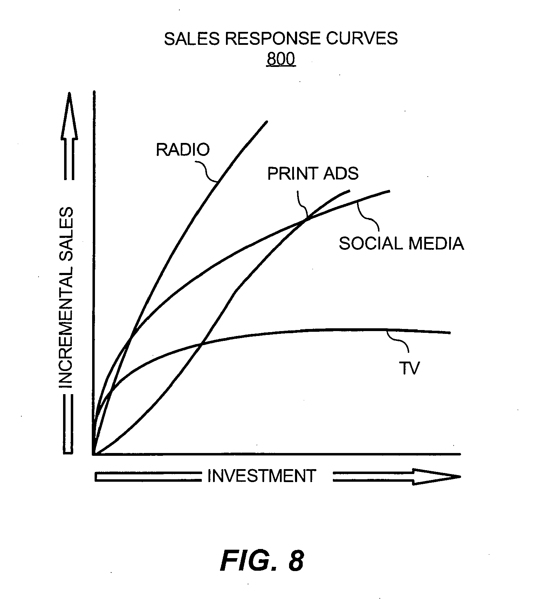

Figures 7 and 8 illustrate generating time series curves for the aggregated social media variables and using the curves in a mixed model, which may be used by the optimizer 106 to perform analytics. In steps 1 and 2, figure 7 shows the aggregating described in figure 6. For each of the aggregated social media variables (e.g., positive, neutral, and negative), a time series is generated. In step 3, through regression analysis, the modeling engine 104 generates curves 701 for each of the aggregated social media variables. The curves may be combined to generate the social media uplift curve 702, which may be used by the optimizer 106 to estimate the optimal investment in social media marketing efforts to maximize sales. The x-axis represents that amount of effort (e.g., monetary investment) and the y-axis represents sales.

Figure 8 shows sales response curves 801, for example, generated by the modeling engine 104. These sales response curves 801 form a mixed model that can be used to estimate sales for multiple different marketing channels. The sales response curves 801 may be used by the optimizer 106 to estimate sales for different marketing investments in the marketing channels and to select the optimal marketing investments in each of the marketing channels to maximize sales.

### 4. Methods

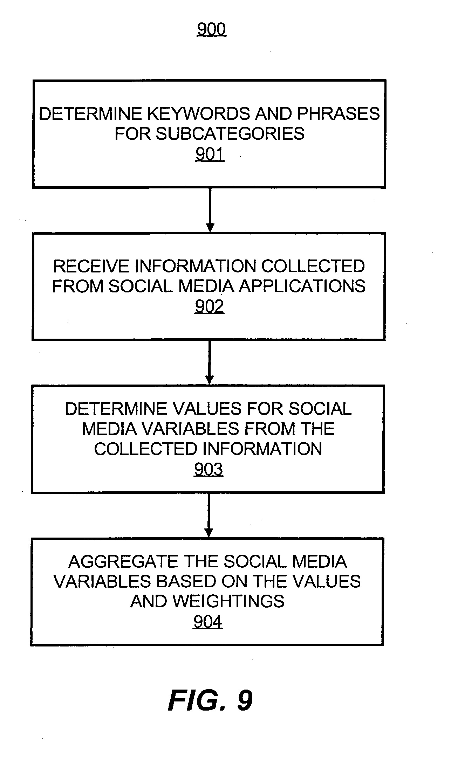

Figure 9 illustrates a method 900 for aggregating social media variables, according to an embodiment. The method 900 and other methods described herein are described with respect to the system 100 shown in figure 1 by way of example and not limitation. The methods may be practiced in other systems.

At step 901, the information identifier module 101 in the system 100 determines keywords and phrases for subcategories and categories, such as shown in the define phase in figure 2. In the define phase 201, the information identifier module 101 of the system 100 determines one or more categories, such as the category 1, sub-categories 1-n for the category 1, and keywords and phrases for each of the sub-categories 1-n. The keywords and phrases are related to the categories and subcategories and may describe one or more products.

At step 902, the system 100 receives information collected from social media applications via the Internet using the keywords and phrases. The listening tool 102 may scan social media applications on the Internet using the keywords and phrases to identify information such as topics including the keywords and phrases.

At 903, the system 100 determines values for social media variables from the collected information. Examples of values for social media variables are shown in figure 5. For example, the social media variables may include message count, sentiment, key opinion leader (KOL), number of unique followers, and relevance of topic count. Values for each of these social media variables are shown in figure 5, and may be determined through weighting/scaling.

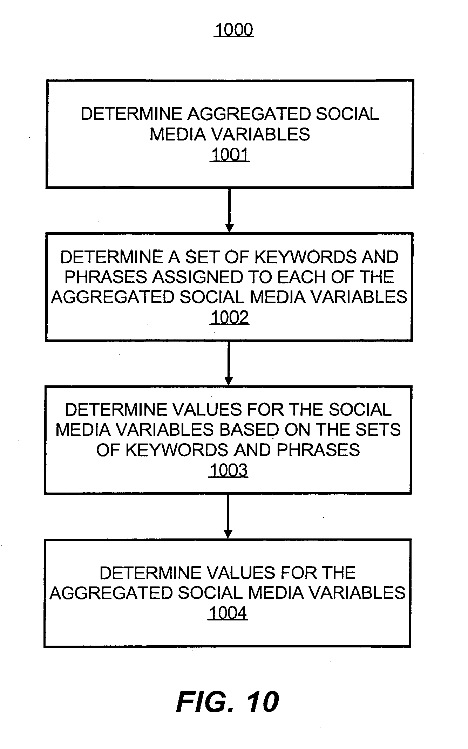

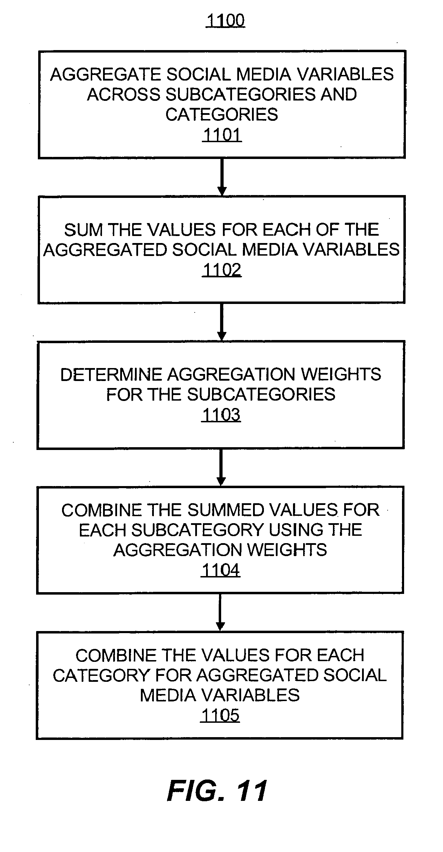

At step 904, the system 100 aggregates the social media variables based on the values and weightings of the social media variables and weightings of subcategories and categories. The aggregation may include aggregating the social media variables by topic, such as shown in figure 5. The aggregating may also include aggregating subcategories and categories, such as shown in figure 6. The aggregating is further described below with respect to figures 10 and 11.

Figure 10 illustrates a method 1000 for aggregating social media variables across topics, according to an embodiment. At step 1001, aggregated social media variables are determined. In the examples described above, the aggregated social media variables include positive, neutral and negative. However, other types of aggregated social media variables may be used.

At step 1002, from the keywords and phrases determined at step 901, a set of keywords and phrases assigned to each of the aggregated social media variables are determined.

At step 1003, values for the social media variables are determined based on the sets of keywords and phrases assigned to the aggregated social media variables. Examples of values for social media variables associated with keywords are shown in figure 5. For example, for the keyword "Great", values are provided for each of the social media variables including message count, sentiment, key opinion leader (KOL), number of unique followers, and relevance of topic count. One or more of the values may be weighted, for example, through the scaling described with respect to figure 5. Note that the step 1003 may be performed as part of the step 903.

At step 1004, values for the aggregated social media variables are determined using the values for the social media variables from step 1003. For example, as shown in figure 5, the "positive" aggregated social media variable value for week 1 is 14 and is calculated from the values of the social media variables as shown. Values for each of the aggregated social media variables are also determined for each week. Thus, a time series set of values by topic for the aggregated social media variables is determined. The aggregator 103 of the system may perform one or more of the steps of the method 1000 and store the values for the aggregated variables in the data storage 130, and this information may be retrieved for aggregating across subcategories and categories.

Figure 11 illustrates a method 1100 for aggregating social media variables across subcategories and categories, according to an embodiment. At step 1101, values for aggregated social media variables for each topic are determined. These are the values from step 1004.

At step 1102, the values for each of the aggregated social media variables for each topic in each subcategory are summed. For example, as shown in figure 6, subcategory 1 includes topics 1-6. All the values for the "positive" aggregated social media variable are summed for topics 1-6 for week 1. Also, all the values for week 2 are summed and so on to determine a time series of "positive" values for subcategory 1. This is also performed for the "neutral" and "negative" aggregated social media variables for subcategory 1 to obtain a time series of values for each of the aggregated social media variables for subcategory 1. Similarly, a time series of values for each of the aggregated social media variables for each of the other subcategories is determined.

At step 1103, aggregation weights for the subcategories are determined. Econometrics may be applied to determine the aggregation weights. Econometrics includes applying conventional quantitative or statistical methods to analyze and test economic relationships, which in these examples may include the relationship between sales and products. Through conventional statistical processes, an aggregation weight is determined for each subcategory. The statistical processes may include linear regression to determine the weights based on historic sales data.

At step 1104, the summed values for each subcategory are combined using the aggregation weights to determine aggregated social media variable values for each category. For example, as shown in figure 6, subcategories 1 and 2 are under category 1. The values for each aggregated social media variable per week in subcategories 1 and 2 are multiplied by their corresponding aggregation weights. The weighted aggregated social media variables are then summed per week to determine a time series of weighted aggregated social media variables for category 1. This process may be performed for each category to aggregate the social media variables across categories.

At step 1105, the values for each category are combined to aggregated social media variables aggregated across categories. Weights for each category may be determined using regression analysis and simulation or provided by a user. The weights are applied to each respective category and used to determine final aggregated social media variable values. The values may be represented in a curve, such as shown in figures 7 and 8.

A model is generated using the time series aggregated social media variables. The model may include a mixed model such as shown in figure 8. For example, the sales response curves form a mixed model that can be used to estimate sales for multiple different marketing channels. The sales response curves may be used by the optimizer 106 to estimate incremental sales for different marketing investments in the marketing channels and to select the optimal marketing investments in each of the marketing channels to maximize sales.

The methods and system described above may be used to aggregated variables other than social media variables. For example, information is collected for the variables. Values for the variables are determined from the collected information, and the variables are aggregated based on the values and weightings determined for the variables. The aggregated variables may be used for model generation.

The embodiments described herein provide technical aspects beyond statistical processing. The system provides an improved and continued man-machine interface that presents measurements for variables that relieves users from mental tasks. For example, the system 100 may generate a model including sales curves, such as shown in figure 6. The sales curves may be displayed via the user interface 105 to provide a user with a convenient visualization of estimated incremental sales given a particular investment. A user, from a displayed sales curve, can easily identify a point on the sales curve where sales may not be improved or where sales may be minimally improved if investment in the marketing channel is increased. This point may be considered a point of diminishing return and an investment may be selected at this point or just before this point. Thus, the embodiments may decrease the mental and physical effort required from a user in order to perform a task of identifying optimal investment in a marketing channel.

In addition, the example shown in figure 5 may be presented to the user via the GUI user interface 105. Through the data mining and analytics techniques described above, the system is operable to distill the vast amount of information captured from the Internet applications, including the social media applications, into simple aggregated variables (e.g., "positive", "neutral" and "negative") that accurate portray meaningful data, such as sentiment, to the user. Given the vast amount of data and the subjective nature of the data, it would be very challenging to present the captured Internet application data in a meaningful manner if this task were attempted to be performed manually.

In addition, another technical aspect is that the generation of the model using the aggregated social media variables allows for faster processing by the optimizer 106 in the system 100 to determine the optimal investment for different marketing channels. For example, through use of the sales curves in the model, optimal investment points for each marketing channel can be quickly identified by a processor. Furthermore, the models may be stored in the data storage 130 and easily updated based on newly gathered social media information for topics as well as based on new information for other marketing channels. This allows for fast generation of more accurate models and more accurate determination of optimized investments in the marketing channels. Additionally, the system transforms data so it may be used for the mixed modeling and so it can be used to generate the sales curves. The transformation includes the aggregation of the social media variables.

One or more of the steps of the methods described herein and other steps described herein and one or more of the components of the systems described herein may be implemented as computer code stored on a computer readable medium, such as the memory and/or secondary storage, and executed on a computer system, for example, by a processor, application-specific integrated circuit (ASIC), or other controller. The computer readable medium may be a non-transitory medium, such as a storage device. The code may exist as software program(s) comprised of program instructions in source code, object code, executable code or other formats. Examples of computer readable medium include conventional computer system RAM (random access memory), ROM (read only memory), EPROM (erasable, programmable ROM), EEPROM (electrically erasable, programmable ROM), hard drives, and flash memory.

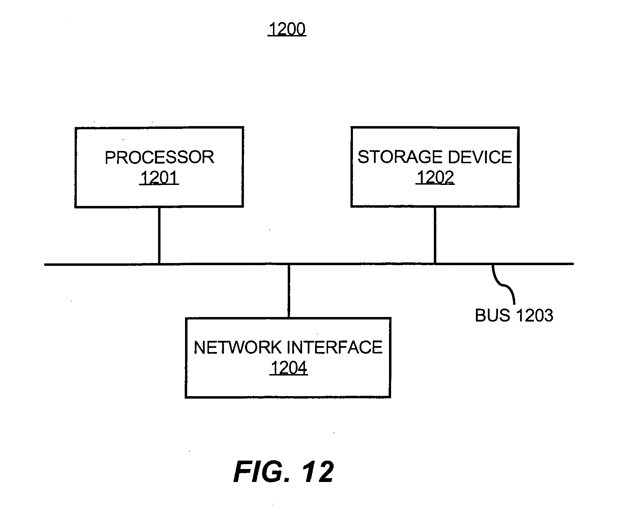

Figure 12 shows a computer system 1200 that may be used as a hardware platform for the system 100. The computer system 1200 may be used as a platform for executing one or more of the steps, methods, and functions described herein that may be embodied as software stored on one or more computer readable storage devices. The computer system 1200 includes a processor 1201 or processing circuitry that may implement or execute software instructions performing some or all of the methods, functions and other steps described herein. Commands and data from the processor 1201 are communicated over a communication bus 1203. The computer system 1200 also includes a computer readable storage device 1202, such as random access memory (RAM), where the software and data for processor 1201 may reside during runtime. The storage device 1202 may also include non-volatile data storage. The computer system 1200 may include a network interface 1204 for connecting to a network. It is apparent to one of ordinary skill in the art that other known electronic components may be added or substituted in the computer system 1200.

While the embodiments have been described with reference to examples, those skilled in the art will be able to make various modifications to the described embodiments without departing from the scope of the claimed embodiments. For example, the systems and methods of the embodiments are generally described with respect to aggregating social media variables. However, the embodiments may be used to aggregate variables for other marketing channels or to aggregate non-marketing variables.

## Claims

1. A social media analytical system configured to measure values for social media variables, the system comprising:
a data storage storing data from Internet social media applications;
an information identifier module determining keywords and phrases, wherein the data stored in the data storage is captured from the social media applications based on the keywords and phrases;
an aggregator retrieving the captured information collected from social media applications, determining values for social media variables from the collected information, and aggregating the social media variables based on the values and weightings of the social media variables; and
a graphical user interface presenting the aggregated social media variables to a user.

2. The system of claim 1, wherein the aggregator determines categories, subcategories for each category, and topics for each subcategory associated with a product, and the aggregator uses econometrics to determine aggregation weights for the subcategories and combines the summed values for each subcategory using the aggregation weights to determine aggregated social media variable values for each category.

3. The system of claim 2, wherein the aggregator determines values for aggregated social media variables for each topic by
determining, from the keywords and phrases, a set of keywords and phrases assigned to each of the aggregated social media variables;
determining values for the social media variables based on the sets of keywords and phrases assigned to the aggregated social media variables; and
determining values for the aggregated social media variables using the values for the social media variables.

4. The system of any one of claims 1-3, wherein the aggregator determines the values for the aggregated social media variables by scaling the values for the social media variables, and combining the scaled values for the social media variables to determine the values for the aggregated social media variables.

5. The system of claim 4, wherein the aggregator determines the scaled values for the social media variables based on the weightings for the social media variables.

6. The system of any one of claims 1-5, wherein the social media variables include message level social media variables, and the values for each of the message level social media variables are calculated based on keywords and phrases identified in each message in the topic.

7. The system of claim 3, wherein the social media variables include topic level social media variables, and the values for each of the topic level social media variables are calculated based on information for all the messages in the topic.

8. The system of any one of claims 1-7, further comprising:
a modeling engine determining a model using the aggregated social media variables, wherein the model is a mixed model including variables for multiple marketing channels.

9. The system of claim 8, wherein the aggregator determines a periodic time series of values for the aggregated social media variables for the model.

10. The system of any one of claims 1-9, further comprising:
a listening tool collecting the information from the social media applications via the Internet.

11. The system of any one of claims 1-10, wherein the aggregated social media variables comprise positive, neutral and negative, and each of the aggregated social media variables describes an attitude of users of the social media applications for the social media variables.

12. A method of determining aggregated social media variables comprising:
determining keywords and phrases;
receiving information collected from social media applications via the Internet using the keywords and phrases;
determining values for social media variables from the collected information; and
aggregating, by a computer system, the social media variables based on the values and weightings of the social media variables.

13. The method of claim 12, wherein aggregating the social media variables comprises:
determining categories, subcategories for each category, and topics for each subcategory associated with a product;
determining values for aggregated social media variables for each topic;
summing the values for each of the aggregated social media variables for each topic in each subcategory;
using econometrics to determine aggregation weights for the subcategories; and
combining the summed values for each subcategory using the aggregation weights to determine aggregated social media variable values for each category.

14. The method of claim 13, wherein determining values for aggregated social media variables for each topic comprises:
determining, from the keywords and phrases, a set of keywords and phrases assigned to each of the aggregated social media variables;
determining values for the social media variables based on the sets of keywords and phrases assigned to the aggregated social media variables; and
determining values for the aggregated social media variables using the values for the social media variables.

15. The method of any one of claims 12-14, wherein determining the values for the aggregated social media variables comprises:
scaling the values for the social media variables; and
combining the scaled values for the social media variables to determine the values for the aggregated social media variables.
